**Europäisches Patentamt**

**European Patent Office**

**Office européen des brevets**

(19)

(11) Veröffentlichungsnummer : **0 046 508**
**B1**

(12) **EUROPÄISCHE PATENTSCHRIFT**

(45) Veröffentlichungstag der Patentschrift : 28.11.84

(21) Anmeldenummer : 81105723.1

(22) Anmeldetag : 21.07.81

(51) Int. Cl.³ : **B 60 G 15/06, F 16 F 9/54**

(54) Entkoppeltes elastisches Lager für karosserieseitige Befestigung einer Radaufhängung.

(30) Priorität : 27.08.80 DE 3032199

(43) Veröffentlichungstag der Anmeldung :
03.03.82 Patentblatt 82/09

(45) Bekanntmachung des Hinweises auf die Patenterteilung : 28.11.84 Patentblatt 84/48

(84) Benannte Vertragsstaaten :
BE FR GB IT NL SE

(56) Entgegenhaltungen :
DE-A- 2 820 585
DE-A- 2 946 516
DE-U- 7 823 305
FR-A- 2 433 427

(73) Patentinhaber : Boge GmbH
Bogestrasse 50
D-5208 Eitorf/Sieg (DE)

(72) Erfinder : Honcamp, Günther, Dipl.Ing.
Schützenstrasse 126
D-5483 Bad Neuenahr-Ahrweiler (DE)

EP 0 046 508 B1

## Beschreibung

Die Erfindung betrifft ein entkoppeltes elastisches Lager, für die karosserieseitige Befestigung einer Radaufhängung an einem Teleskopschwingungsdämpfer, der koaxial von einer Schraubenfeder umgeben ist, wobei das Lager einen Ringflansch aufweist, der an seinem inneren Rand einen zur Drehachse gerichteten umlaufenden Hohlwulst besitzt, gegen dessen Erhöhung ein erster Ring aus elastomerem Material eingeknüpft ist, welcher koaxial um ein Ende des Teleskopschwingungsdämpfers befestigt ist, und wobei das Lager einen zweiten Ring aus elastomerem Material aufweist, gegen den ein Ende der Schraubenfeder abgestützt ist.

Ein derartiges Lager ist beispielsweise aus dem DE-GM 78 23 305 bekannt. Bei diesem bekannten Lager ist ein erster Ring aus elastomerem Material mit einem Ringflansch über einen hieran angebrachten Hohlwulst eingeführt. Unabhängig von den Federungs- und Dämpfungseigenschaften des um die Kolbenstange befestigten ersten Gummiringes und die Auswirkungen auf das Dämpfungsverhalten des Schwingungsdämpfers ist die zur elastischen Abstützung der Radaufhängung dienende Schraubenfeder mit ihrem oberen Ende gegen einen zweiten Gummiring abgestützt, so daß eine gegenseitige Beeinflussung nicht stattfinden kann. Ein zwischen dem Ringflansch und einer als Halterung für den zweiten Gummiring und als Widerlager für das obere Ende der Schraubenfeder dienende Ringscheibe angeordnetes Gleitlager ist durch eine gesonderte Dichtung gegen Verschmutzung geschützt.

Das bekannte Lager besteht somit in nachteiliger Weise aus einer Vielzahl von Einzelteilen, die teilweise haftend miteinander verbunden sind. Soweit es sich dabei um Teile größeren Durchmessers handelt, beispielsweise den zweiten Gummiring und den Lagerteller oder die gesonderte Dichtung und den Ringflansch, sind länger andauernde Aufheizzeiten erforderlich, um die elastischen und starren Teile durch Vulkanisieren miteinander zu verbinden. Bei vorgegebener Formengröße können nur wenige Teile gleichzeitig bearbeitet werden.

Der vorliegenden Erfindung liegt die Aufgabe zugrunde, ein elastisches Lager der eingangs beschriebenen Gattung zu schaffen, welches die Nachteile des bekannten Lagers vermeidet, und insbesondere das Lager durch Verringerung der Anzahl seiner Einzelteile in der Herstellung zu verbilligen und die Bearbeitung der Einzelteile zu erleichtern.

Diese Aufgabe wird erfindungsgemäß dadurch gelöst, daß der zweite Ring aus elastomeren Material in die Vertiefung des Hohlwulstes an dem Ringflansch eingeführt ist.

Bei dem elastischen Lager nach der Erfindung hält der Hohlwulst somit auf besonders vorteilhafte und einfache Weise mit seiner Erhöhung den ersten Ring aus elastomerem Material und gleichzeitig in seiner Vertiefung den zweiten Ring aus elastomerem Material. Eine haftende Verbindung durch Vulkanisierung oder dergleichen ist dabei lediglich zwischen einer etwaigen Buchse im Inneren des ersten Ringes und dessen Innenwandung notwendig. Alle Teile größeren Durchmessers sind hingegen durch Einführung miteinander verbunden. Dadurch kann bei vorgegebener Größe der Formen für das Vulkanisieren eine größere Anzahl von Teilen mit kleinerem Durchmesser, nämlich der ersten Ringe und ihrer zugehörigen Buchsen, gleichzeitig bei kürzerer Aufheizzeit haftend miteinander verbunden werden. Vorteilhafterweise können die übrigen zum Lager gehörigen und nicht mehr durch Vulkanisierung mit elastischen Teilen verbundenen starren Teile, welche normalerweise aus Stahl bestehen, einfacher und wirksamer durch beispielsweise Verzinken und anschließendes Chromatisieren oberflächengeschützt werden, was bei Gummimetallteilen schlecht möglich ist. Dadurch kann das bei letzteren ansonsten übliche Rostschutzverfahren, nämlich Phosphatieren und Lackieren mit schlechterem Schutz gegen Korrosion, entfallen. Zusätzlich entfällt die aufwendige Vorarbeit, welche erforderlich ist, um ein elastomeres Teil mit einem starren Metallteil gut haftend verbinden zu können, nämlich die Vorarbeiten Sandstrahlen, Entfetten und Einstreichen mit Haftmittel. Auch die Nacharbeiten, wie Putzen der vulkanisierten Teile, ist nicht mehr nötig.

Vorteilhafterweise wird gemäß einem weiteren Merkmal der Erfindung in dem zweiten Ring in einer Ringnut eines Wulstes ein Lagerteller zur direkten oder mittelbaren Aufnahme eines Endes der Schraubenfeder eingeführt.

Wenn zwischen dem Lagerteller und dem Ende der Schraubenfeder ein Gleit- oder Kugellager zur Erleichterung der radialen Verdrehmöglichkeit vorgesehen ist, kann gemäß einem anderen Markmal der Erfindung an dem zweiten Ring der Wulst als Abdichtung für das Gleit- oder Kugellager in dem Lagerteller ausgebildet sein.

Vorteilhafterweise ist an dem zweiten Ring ein elastischer Steg als Abdichtung für das Gleitoder Kugellager an dessen der Abdichtung gegenüberliegender Seite angeordnet.

In weiterer Ausgestaltung der Erfindung kann der zweite Ring mit Hohlräumen versehen sein, welche gegebenenfalls nach außen hin offen sind. Im Rahmen der Erfindung sind Anzahl und Größe der Hohlräume nicht begrenzt, so daß beispielsweise auch ein zweiter Ring aus Moosgummi als erfindungsgemäß anzusehen ist.

Die Erfindung wird nachstehend anhand von in der Zeichnung schematisch dargestellten Ausführungsbeispielen näher erläutert. Es zeigen :

Figur 1 ein erfindungsgemäß ausgebildetes Lager mit einem als direktes Widerlager dienenden Lagerteller, teilweise geschnitten, und

Figur 2 eine weitere Ausführungsform eines

3         **0 046 508**         4

erfindungsgemäßen Lagers mit Hohlräumen im zweiten Ring und reibungsmindernden Drehlagern zwischen dem Lagerteller und der Schraubenfeder.

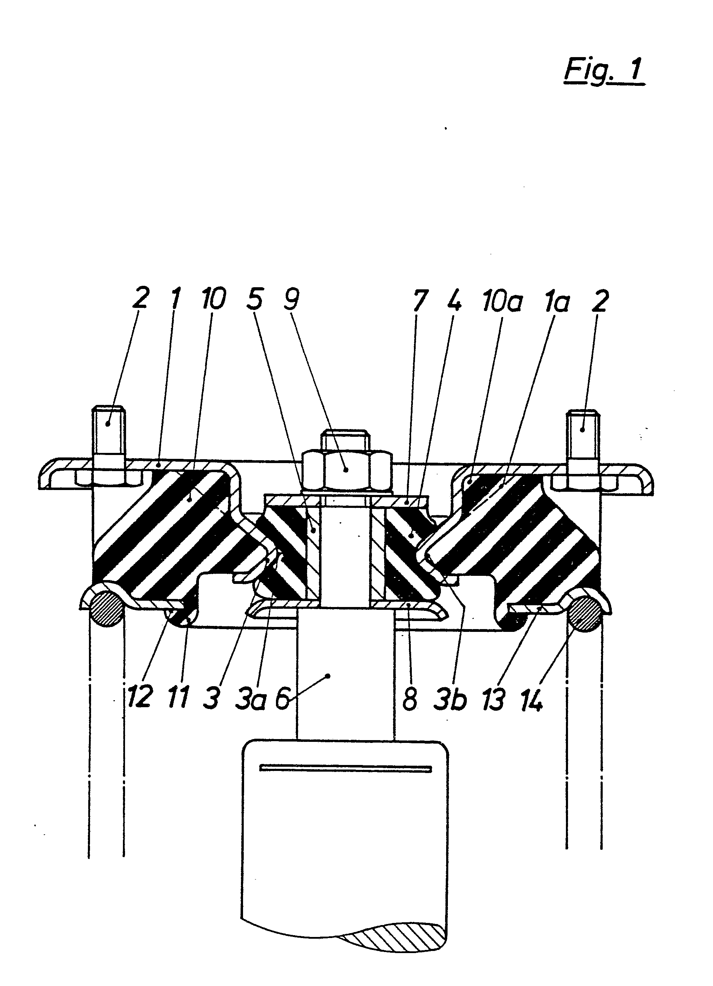

Figur 1 zeigt ein Lager, bei welchem ein Ringflansch 1 mit Schrauben 2 an einem nicht dargestellten Karosserieteil verschraubt ist. Der Ringflansch 1 ist innen umgebogen zu einem ringförmigen Hohlwulst 3. Der Hohlwulst 3 hält mit seiner Erhöhung 3a einen ersten Ring 4 aus Gummi, der an einer Buchse 5 anvulkanisiert ist. Die Buchse 5 ist auf dem äußeren, abgesetzten Ende einer Kolbenstange 6 zwischen zwei Scheiben 7 und 8 mittels einer Mutter 9 verschraubt.

In die Vertiefung 3b des Hohlwulstes 3 ist ein zweiter Ring 10 aus Gummi eingeführt. An der Unterseite des zweiten Ringes 10 ist in einem Wulst 11 eine Ringnut 12 eingearbeitet, in die ein Lagerteller 13 eingeführt ist. Der Lagerteller 13 bildet das Widerlager für ein Ende einer Schraubenfeder 14, deren anderes Ende in bekannter Weise gegen ein unteres Lager an einer Radaufhängung abgestützt ist (nicht dargestellt). Der zweite Ring 10 weist Aussparungen 10a auf, in welche entsprechende Sicken 1a des Ringflansches 1 eingreifen. Dadurch ist der Ring 10 gegen ein radiales Verdrehen gesichert.

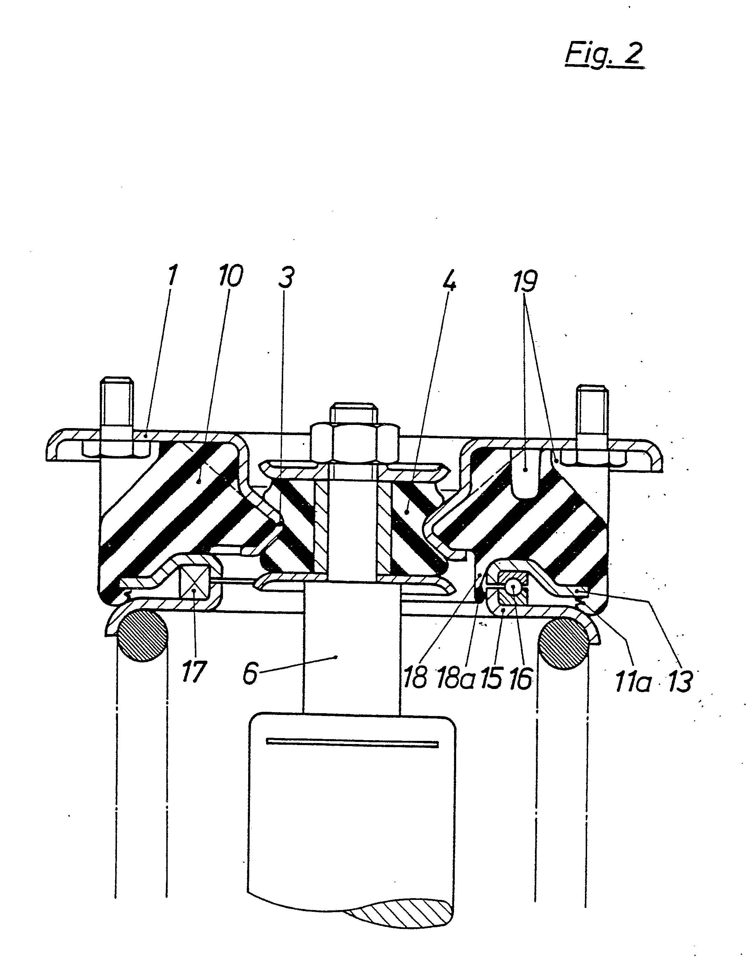

Gegenüber dem Lager gemäß Figur 1, mit welchem es ansonsten im wesentlichen übereinstimmt, weist das Lager nach Figur 2 einen zusätzlichen, außen umgebogenen Lagerring 15 auf, der gegenüber dem Lagerteller 13 beispielsweise über ein Kugellager 16 (rechte Seite der Figur 2) oder einen Gleitring 17 (linke Seite der Figur 2) verdrehbar ist und anstelle des Lagertellers 13 das unmittelbare Widerlager für ein Ende der Schraubenfeder 14 bildet.

Bei dieser Ausführung eines Lagers nach der Erfindung ist der Wulst 11 außen an der Unterseite des zweiten Rings 10 angeordnet und sein nach innen weisender Rand als Dichtlippe 11a ausgebildet, die den Zwischenraum zwischen der Unterseite des Lagertellers 13 und der Oberseite des Lagerringes 15 an deren äußerem Umfang verschließt und damit das Kugellager 16 bzw. den Gleitring 17 gegen Zerstörung durch Verschmutzung schützt.

Der zweite Ring 10 kann auch innen an seiner Unterseite mit einem elastischen Steg 18 versehen sein und mit einer hieran angebrachten Dichtkante 18a das Kugellager 16 von innen her abdichten. In den Ring 10 können Hohlräume 19 eingearbeitet sein, um die Feder- und Dämpfungseigenschaften in gewünschter Weise zu beeinflussen.

Bei den beiden in den Figuren 1 und 2 dargestellten Ausführungsbeispielen der Erfindung ist der erste Ring 4 an der Buchse 5 anvulkanisiert. Alle übrigen Verbindungen zwischen den elastischen Teilen, dem ersten 4 und zweiten Ring 10, und den starren Teilen, dem Ringflansch 1 und dem Lagerteller 13, erfolgen durch Einführung. Dadurch entfällt das Vulkanisieren großer Teile. Die Montage der Einzelteile und des gesamten Lagers ist gegenüber den Lagern herkömmlicher Bauweise stark vereinfacht.

## Ansprüche

1. Entkoppeltes elastisches Lager, für die karosserieseitige Befestigung einer Radaufhängung an einem Teleskopschwingungsdämpfer (6), der koaxial von einer Schraubenfeder (14) umgeben ist, wobei das Lager einen Ringflansch (1) aufweist, der an seinem inneren Rand einen zur Drehachse gerichteten umlaufenden Hohlwulst (3) besitzt, gegen dessen Erhöhung (3a) ein erster Ring (4) aus elastomerem Material eingeführt ist, welcher koaxial um ein Ende des Teleskopschwingungsdämpfers (6) befestigt ist, und wobei das Lager einen zweiten Ring (10) aus elastomerem Material aufweist, gegen den ein Ende der Schraubenfeder (14) abgestützt ist, dadurch gekennzeichnet, daß der zweite Ring (10) aus elastomerem Material in die Vertiefung (3b) des Hohlwulstes (3) an dem Ringflansch (1) eingeführt ist.

2. Lager nach Anspruch 1, dadurch gekennzeichnet, daß in dem zweiten Ring (10) in einer Ringnut (12) eines Wulstes (11) ein Lagerteller (13) zur Aufnahme eines Endes der Schraubenfeder (14) eingeführt ist.

3. Lager nach Anspruch 2, dadurch gekennzeichnet, daß an dem zweiten Ring (10) der Wulst (11) als Abdichtung (11a) für ein Gleit- oder Kugellager (17, 16) in dem Lagerteller (13) ausgebildet ist.

4. Lager nach der Ansprüche 1 bis 3, dadurch gekennzeichnet, daß an dem zweiten Ring (10) ein elastischer Steg (18) als Abdichtung (18a) für das Gleit- oder Kugellager (17, 16) an dessen der Abdichtung (11a) gegenüberliegender Seite angeordnet ist.

5. Lager nach einem der Ansprüche 1 bis 4, dadurch gekennzeichnet, daß der zweite Ring (10) mit Hohlräumen (19) versehen ist, welche gegebenenfalls nach außen hin offen sind.

## Claims

1. Self-contained elastic support for attaching to a vehicle body a wheel suspension unit comprising a telescopic damper (6), which is enclosed coaxially in a coil spring (14), the support having an annular flange (1) which has on its inner periphery a circumferentially extending inwardly directed hollow bead (3), against the apex (3a) of which there engages a first ring (4) of elastomeric material which is secured coaxially around one end of the telescopic damper (6) and the support having a second ring (10) of elastomeric material against which one end of the coil spring (14) abuts, characterised in that, the second ring (10) of elastomeric material engages in the concave side (3b) of the hollow bead (3) on the annular flange (1).

2. Support according to Claim 1, characterised in that, an abutment disc (13) for receiving one end of the coil spring (14) engages in an annular groove (12) in a bead (11) on the second ring (10).

3. Support according to Claim 2, characterised in that, the bead (11) on the second ring (10) is formed with a seal (11a) for a sliding or rolling bearing (17, 16) in the abutment disc (13).

4. Support according to Claims 1 to 3, characterised in that, an elastic web (18) is provided on the second ring (10) with a seal (18a) for the bearing (17, 16) at the opposite side of the bearing from the seal (11a).

5. Support according to one of Claims 1 to 4, characterised in that, the second ring (10) is provided with cavities (19) which may be open to the outside.

**Revendications**

1. Support élastique et indépendant pour la fixation d'une unité de suspension de roue sur la carrosserie au niveau d'un amortisseur télescopique (6) qui est entouré coaxialement d'un ressort hélicoïdal (16), le support présentant un flasque annulaire (1) qui présente au niveau de son bord intérieur un bourrelet creux (3) circonférentiel dirigé vers l'axe de rotation, et contre la saillie (3a) duquel est insérée une première bague (4) en matière élastomère qui est fixée coaxialement autour d'une extrémité de l'amortisseur télescopique (6), le support présentant une deuxième bague (10) en matière élastomère contre laquelle s'appuie une extrémité du ressort hélicoïdal (14), caractérisé en ce que la deuxième bague (10) en matière élastomère est insérée dans l'évidement (3b) du bourrelet creux (3) du flasque annulaire (1).

2. Support selon la revendication 1, caractérisé en ce que, dans la deuxième bague (10), un plateau de portée (13) destiné à recevoir une extrémité du ressort hélicoïdal (14) est inséré dans une gorge annulaire (12) d'un bourrelet (11).

3. Support selon la revendication 2, caractérisé en ce que, sur la deuxième bague (10), le bourrelet (11) forme une garniture d'étanchéité (11a) pour un palier lisse ou à billes (17, 16) incorporé dans le plateau de portée (13).

4. Support selon les revendications 1 à 3, caractérisé en ce que, sur la deuxième bague (10) est prévue une nervure élastique (18) qui forme une garniture d'étanchéité (18a) pour le palier lisse ou à billes (17, 16), sur le côté de ce palier qui est à l'opposé de la garniture d'étanchéité (11a).

5. Support selon l'une des revendications 1 à 4, caractérisé en ce que la deuxième bague (10) est munie d'alvéoles (19) qui sont également ouverts vers l'extérieur.

*Fig. 1*

Fig. 2